# EUROPÄISCHE PATENTANMELDUNG

(11) **EP 1 283 108 A1**
(43) Veröffentlichungstag der Anmeldung: **12.02.2003**
(21) Anmeldenummer: 02015970.3
(22) Anmeldetag: 18.07.2002
(51) Int. Cl.: B32B 27/32

(54) **Flachfolie**

(30) Priorität: 31.07.2001 DE 20112691 U
(71) Anmelder: FOLIEtec Kunststoffwerk AG, 06571 Rossleben (DE)
(72) Erfinder: Eck, Rolf, 06571 Wiehe (DE)
(74) Vertreter: Haussingen, Peter

(57) **Zusammenfassung**

Die Erfindung beschreibt eine mittels Coextrusions-Blasverfahren hergestellte Folie, die eine Festversiegelung auf Materialien mit geschlossenenporigen Oberflächen, wie Metallen oder Glas als auch auf Materialien mit offenporiger oder faseriger Oberfläche wie Keramik, Karton, Papier oder Vlies, ohne Haftvermittler gewährleistet.

Das mit dem Trägermaterial ein- oder beidseitig coextrudierte Siegelmedium besteht erfindungsgemäss aus einem Ethylen/Acrylsäure/Acrylat Copolymer mit einer Dichte von 0,925 bis 0,927 g/cm³ mit einem MFI von bis zu 7.

## Beschreibung

Die Erfindung bezeichnet eine Folie mit einem Trägermaterial aus Polyethylen oder Polypropylen als Flachfolie, die mittels Coextrusions-Blasverfahren hergestellt sowie einoder beidseitig ein Siegelmedium aufweist.

Aus dem bekannten Stand der Technik sind eine Vielzahl von beschichteten Folien zum Kaschieren oder Siegeln auf und mit anderen Materialien als auch mit sich selbst bekannt. Beispielsweise werden für Siegelschichten geringer Schichtdicke Ionomere auf der Basis von Ethylen eingesetzt, die eine Dichte im Bereich von 0,94 g/cm³ und einen MFI (Melt Flow Index) von 1,3 aufweisen.
Eine derartige heiss-siegelbare, zumindest monaxial orientierte Mehrschichtfolie mit asymmetrischem Aufbau aus einer Folie aus einem Polypropylenpolymeren als Basisschicht und zwei außenliegenden Siegelschichten, von denen die eine aus einem Ionomerharz oder einem Ethylen/Vinylacetat-Copolymeren und die andere aus einem Copolymerisat aus Ethylen/Acrylsäure und gegebenenfalls Acrylsäurederivaten besteht, wird in der Druckschrift DE 35 43 118 A1 offenbart. Diese OPP-Folie (orientiertes Polypropylen) ist insbesondere zur Herstellung von Schlauchbeutelverpackungen geeignet, wobei die Verbindung der Folie zum Schlauch so erfolgt, dass gleiches Oberflächenmaterial gegeneinander gesiegelt und dadurch miteinander verbunden wird. Die benutzten Siegelschichten weisen eine niedrige Schichtdicke, die zumeist im Bereich von 2 bis 3 µm liegt, auf. Die orientierte Basisschicht ist mechanisch nicht hoch belastbar und ist für Verpackungen, die eine hohe Einreiss- und Weiterreissfestigkeit aufweisen müssen, nicht einsetzbar. Ein Siegeln gegen dritte Materialien zur Erzielung von Verbindungen mit hoher Haftfestigkeit ist damit ebenfalls nicht möglich.
Insbesondere beim Einsatz von Folien für Verpackungen, die aus verschiedenen Materialien gebildet werden, wird auf einem Grundmaterial ein Haftvermittler schichtförmig aufgebracht, dessen Verbindung mit einem Deckmaterial, mit einer weiteren Schicht aus dem gleichem Material als Haftvermittler, mittels thermischer Verfahren erfolgt. Auf Grund des notwendigen Haftvermittlers ist das Verbinden einer beschichteten Folie aus thermoplastischem Kunststoff mit einem Gegenpart aus einem beliebigen anderen, unbeschichtetem Material nicht in optimaler Qualität möglich.

Die Aufgabe der Erfindung besteht darin, eine mittels Coextrusions-Blasverfahren hergestellte Flachfolie zu entwikkeln, die eine Festversiegelung auf Materialien mit geschlossenenporigen Oberflächen, wie Metallen oder Glas als auch auf Materialien mit offenporiger oder faseriger Oberfläche wie Keramik, Karton, Papier oder Vlies ohne einen zusätzlichen Haftvermittler auf diesen Oberflächen gewährleistet.

Die Aufgabe wird durch die im Patentanspruch 1 aufgeführten Merkmale gelöst. Bevorzugte Weiterbildungen ergeben sich aus den Unteransprüchen.

Das Wesen der Erfindung besteht darin, eine Flachfolie mit einem Trägermaterial aus Polyethylen oder Polypropylen mittels Coextrusions-Blasverfahren herzustellen, wobei die Folie mit einem Ethylen/Acrylsäure/Acrylat Copolymer coextrudiert wird. Diese durch Coextrusion ein- oder auch beidseitig aufgebrachte Schicht dient als Siegelschicht. Das als Siegelschicht verwendete Ethylen/Acrylsäure/Acrylat Copolymer weist vorzugsweise eine Dichte von 0,925 bis 0,927g/cm³ mit einem hohen MFI (Melt Flow Index) im Bereich von 7 auf.

Die Monofolie aus Polyethylen oder Polypropylen mit Ethylen/Acrylsäure/Acrylat Copolymer - Beschichtung kann in allen erforderlichen und üblichen Dicken hergestellt werden, wobei die Dicke der Siegelschicht bis zu 40% der Gesamtdikke der Folie betragen kann.
Es lassen sich ein- oder beidseitig mit einer Siegelschicht ausgestattete Automatenfolien bis zu einer Dicke von mindestens 150µm herstellen, die eine hohe mechanische Widerstandskraft aufweisen

Mit der erfindungsgemäßen Siegelfolie lässt sich eine verbundartige, verschweißte Verbindung mit dem Grundmaterial herstellen, die nicht lösbar, dicht ist und hohen mechanischen Belastungen stand hält. Das Trennen von Siegelfolie und Verbundpartner ist nur durch Zerstörung einer der Komponenten möglich. Das Haupteinsatzgebiet der Folie mit dem coextrudierten Siegelmedium liegt in der direkten Festversiegelung mit faserhaltigen Materialien wie Vlies, Karton, Papier sowie Glas und Keramik als auch Metallen wie Aluminium, ebenso das Kaschieren. Der jeweilige Partner muss zur Erzielung der festen Haftung nicht vorbehandelt oder mit dem gleichen oder ähnlichem Siegelmaterial beschichtet sein, wie dies sonst beispielsweise bei vergütetem Glas, beschichtetem Aluminium oder vorbeschichteten Fasermaterialien erforderlich ist.
Verbundfolien aus verschiedenen Materialien lassen sich auf diese Weise ebenfalls günstig herstellen.
Die Folie ist auch mit sich selbst siegelfähig.
Auf Grund des Folienaufbaus mit einer Trägerfolie aus Polyethylen oder Polypropylen sind Verpackungen mit hohen Ansprüchen an die Dichtheit und Belastbarkeit herstellbar.
Die Verarbeitungsgeschwindigkeit der Folie beim Anwender ist hoch, da die Verarbeitungstemperatur auf Grund des als Siegelschicht verwendeten Ethylen/Acrylsäure/Acrylat Copolymer bei gleichbleibender Siegelqualität niedriger als bei Siegelschichten aus Ionomeren liegt.
Des Weiteren können den Ausgangsmaterialien für die Schicht aus Polypropylen oder Polyethylen, in Abhängigkeit von gewünschten Eigenschaften, Farbpigmente, Gleit- und Antiblockmittel als auch Antioxidantien und UV-Stabilisatoren oder UV-Absorber sowie deren Kombination miteinander als Additiv zugesetzt werden.

In einer beispielhaften Ausführung einer Folie mit einem Trägermaterial aus Polyethylen, einer Gesamtdicke von 50µm beträgt die Dicke der Siegelschicht aus einem Ethylen/Acrylsäure/Acrylat Copolymer 20µm. Die Folie wird in bekannter Weise im Coextrusions-Blasverfahren hergestellt und der erhaltene Folieschlauch wie üblich aufgetrennt, um die Flachfolie zu erhalten.
Es sind beispielsweise Aluminium-Verbundfolien direkt, ohne Vorbeschichtung des Aluminiums mit einem Haftvermittler, herstellbar als auch das direkte Kaschieren von Karton mit der Flachfolie mittels bekannter Verfahren gegeben.

## Patentansprüche

1. Mittels Coextrusions-Blasverfahren hergestellte Folie zur direkten Verbindung mit Materialien, die eine offen-, geschlossenenporige oder faserige Oberfläche aufweisen, mit einem Trägermaterial aus Polyethylen oder Polypropylen, das ein- oder beidseitig ein Siegelmedium aufweist, **dadurch gekennzeichnet,**
**dass** das mit dem Trägermaterial coextrudierte Siegelmedium aus einem Ethylen/Acrylsäure/Acrylat Copolymer mit einer Dichte von 0,925 bis 0,927 g/cm³ mit einem MFI von bis zu 7 besteht.

2. Folie nach Anspruch 1, **dadurch gekennzeichnet,**
**dass** die Dicke der Siegelschicht bzw. Siegelschichten bis zu 40% der Gesamtdicke der Folie betragen.

3. Folie nach den Ansprüchen 1 und 2, **dadurch gekennzeichnet,**
**dass** die Trägerfolie zur Einstellung gewünschter Eigenschaften Additive aufweist.
